# EUROPÄISCHE PATENTSCHRIFT

(11) **EP 0 949 002 B1**
(45) Veröffentlichungstag und Bekanntmachung des Hinweises auf die Patenterteilung: **30.03.2005**
(21) Anmeldenummer: 99106668.9
(22) Anmeldetag: 01.04.1999
(51) Int. Cl.: B01L 3/00

(54) **Verfahren zur Herstellung von analytischen Hilfsmitteln**
Method for manufacturing analytical elements
Méthode de fabrication d'élements d'analyse

(30) Priorität: 08.04.1998 DE 19815684
(43) Veröffentlichungstag der Anmeldung: 13.10.1999
(73) Patentinhaber: Roche Diagnostics GmbH, 68298 Mannheim (DE)
(72) Erfinder: Schwöbel, Wolfgang, 68309 Mannheim (DE); Hein, Bernd, 69221 Dossenheim (DE)

(56) Entgegenhaltungen:
- US-A- 3 961 346
- US-A- 4 171 866
- US-A- 4 447 140
- US-A- 4 790 640
- MARTYNOVA L ET AL: "FABRICATION OF PLASTIC MICROFLUID CHANNELS BY IMPRINTING METHODS" ANALYTICAL CHEMISTRY, AMERICAN CHEMICAL SOCIETY. COLUMBUS, US, Bd. 69, Nr. 23, 1. Dezember 1997 (1997-12-01), Seiten 4783-4789, XP000955414 ISSN: 0003-2700

## Beschreibung

Die Erfindung betrifft ein Verfahren zur Herstellung von analytischen Hilfsmitteln mit einer kapillaraktiven Zone, vorzugsweise von analytischen Testelementen für die Untersuchung flüssiger Proben. Insbesondere betrifft die Erfindung ein Verfahren zur Herstellung von analytischen Hilfsmitteln aus Bandware.

Zur qualitativen oder quantitativen analytischen Bestimmung von Bestandteilen von flüssigen Proben, z. B. Körperflüssigkeiten wie Blut, Serum oder Urin, werden oft sogenannte trägergebundene Tests (Testträger, Testelemente) verwendet. Bei diesen sind Reagenzien in entsprechenden Schichten eines festen Trägers eingebettet, der mit der flüssigen Probe in Kontakt gebracht wird. Die Reaktion von flüssiger Probe und Reagenzien führt bei Anwesenheit eines Zielanalyten zu einem nachweisbaren Signal, meist einem Farbumschlag, welcher visuell oder mit Hilfe eines Geräts, z. B. reflexionsphotometrisch, ausgewertet werden kann.

Testelemente oder Testträger sind häufig als Teststreifen ausgebildet, die im wesentlichen aus einer länglichen Tragschicht aus Kunststoffmaterial und darauf angebrachten Nachweisschichten als Testfeldern bestehen. Es sind jedoch auch Testträger bekannt, die als quadratische Plättchen gestaltet sind.

Visuell oder reflexionsphotometrisch auszuwertende Testelemente für die klinische Diagnostik sind oft so aufgebaut, daß die Probenauftragszone und die Detektionszone in einer vertikalen Achse übereinander angeordnet liegen, so daß die Probe beispielsweise von oben auf eine Probenauftragszone aufgegeben wird und das Beobachten einer Farbbildung von unten erfolgt.

Diese Konstruktionsweise birgt eine Reihe von Problemen. Wenn der probenbeladene Teststreifen zur Vermessung in ein Gerät, beispielsweise ein Reflexionsphotometer, eingebracht werden muß, kann potentiell infektiöses Probenmaterial mit Geräteteilen in Berührung kommen und diese gegebenenfalls kontaminieren. Desweiteren ist, vor allem in den Fällen, in denen die Teststreifen von ungeschulten Personen benutzt werden, beispielsweise bei der Blutzuckerselbstkontrolle von Diabetikern, eine Volumendosierung nur schwer zu realisieren. Zudem benötigen herkömmliche Testelemente aufgrund ihres Aufbaus oftmals verhältnismäßig große Probenvolumina, um zuverlässige Messungen zu ermöglichen. Je mehr Probenvolumen benötigt wird, um so schmerzhafter kann die Probengewinnung für den Patienten, dessen Blut untersucht werden soll, sein. Es wird deshalb angestrebt, Teststreifen zur Verfügung zu stellen, die mit möglichst wenig Probenmaterial auskommen.

Die Verwendung von analytischen Testelementen mit kapillaraktiven Zonen stellt eine Möglichkeit dar, geringe Mengen - typischerweise wenige Mikroliter - an Probenvolumen zuverlässig zu dosieren und innerhalb des Testelements zu transportieren. Solche Testelemente sind im Stand der Technik beschrieben.

EP-B 0 138 152 behandelt eine Wegwerfküvette, die dazu geeignet ist, praktisch simultan Probenflüssigkeit mit Hilfe eines Kapillarspaltes in eine Probenkammer aufzunehmen und zu vermessen. Für spezifische Nachweisreaktionen können Reagenzien im Inneren des kapillaren Hohlraums vorgesehen sein. Der Hohlraum wird zumindest teilweise von einer semipermeablen Membran begrenzt. Die Reagenzien können beispielsweise durch Beschichtung der Wände oder durch Einbetten der Reagenzien in eine semipermeable Membran im Hohlraum untergebracht sein.

EP-A-0 287 883 beschreibt ein Testelement, das für die Volumendosierung einen kapillaren Zwischenraum zwischen einer Nachweisschicht und einem inerten Träger nutzt. Zur Befüllung des kapillaren Raumes wird das Testelement in die zu untersuchende Probe getaucht, was große Probenvolumina erforderlich macht, weshalb diese Form der Volumendosierung bevorzugt für die Untersuchung von im Überschuß vorhandenem Probenmaterial, beispielsweise Urin, geeignet ist.

Aus EP-A 0 212 314 ist ebenfalls ein analytisches Testelement mit kapillaraktiver Zone bekannt. Zur Herstellung dieses Testelements wird vorgeschlagen, zwischen zwei Kunststoffschichten eine Zwischenschicht einzubringen, die eine der kapillaraktiven Zone entsprechende Aussparung enthält. Die Aussparung soll gemäß EP-A 0 212 314 bereits vor der Montage in der Zwischenschicht enthalten sein. Insbesondere bei der Verwendung flexibler Zwischenschichten, wie z. B. beidseitig klebender Klebebänder, gestaltet sich die Montage des analytischen Hilfsmittels als schwierig, da ein genaues, reproduzierbares Positionieren der Zwischenschicht, die bereits eine Aussparung enthält, nur schwer und umständlich zu realisieren ist.

Das Dokument US-A-4790640 beschreibt die Herstellung von Testelementen durch lokales Auftragen eines Klebers als Distanzhalterschicht zwischen zwei Platten.

Aufgabe der Erfindung ist es, die Nachteile des Standes der Technik zu beseitigen. Insbesondere ist es die Aufgabe der vorliegenden Erfindung, ein Verfahren bereitzustellen, mit dem analytische Hilfsmittel preisgünstig, reproduzierbar und exakt hergestellt werden können.

Gegenstand der Erfindung ist ein Verfahren zur Herstellung von analytischen Hilfsmitteln mit einer kapillaraktiven Zone, bei dem
(a) eine Trägerschicht bereitgestellt wird;
(b) auf die Trägerschicht eine Distanzhalterschicht auflaminiert wird;
(c) durch die auf die Trägerschicht laminierte Distanzhalterschicht eine Kontur gestanzt, geschnitten oder geprägt wird, welche die Form der kapillaraktiven Zone bestimmt;
(d) diejenigen Teile der Distanzhalterschicht von der Trägerschicht abgenommen werden, die nicht für die Formung der kapillaraktiven Zone benötigt werden; und
(e) eine Abdeckschicht auf die Distanzhalterschicht aufgebracht wird, so daß sich eine kapillaraktive Zone ergibt.

Als analytische Hilfsmittel im erfindungsgemäßen Sinn werden Vorrichtungen verstanden, die mit Hilfe ihrer kapillaraktiven Zone selbsttätig, d. h. durch Kapillarkräfte, Probenflüssigkeiten aufnehmen und für eine gleichzeitige oder spätere Analyse zur Verfügung stellen können. Die kapillaraktive Zone kann dabei als Kapillarspalt vorhanden sein oder durch Verwendung kapillaraktiver, poröser Materialien, wie z. B. von Vliesen, Papieren oder Membranen, erzeugt werden.

Vorzugsweise können analytische Hilfsmittel analytische Testelemente sein, bei denen bereits während oder nach der Aufnahme der Probenflüssigkeit geeignete Nachweisreaktionen ablaufen, welche die Bestimmung der Anwesenheit oder Menge eines Analyts in der Probe erlauben. Analytische Hilfsmittel im erfindungsgemäßen Sinn können jedoch auch Küvetten oder Pipetten sein, die lediglich der Probenaufnahme durch die kapillare Zone dienen, und bei denen die Probe zur Analyse entweder wieder abgegeben wird oder bei denen die Analyse ohne nachgeschaltete Reaktionen erfolgt. Die analytischen Hilfsmittel können selbstverständlich auch zur Lagerung und Aufbewahrung von Probenflüssigkeiten benutzt werden.

Das Vorhandensein einer kapillaraktiven Zone ermöglicht in den erfindungsgemäß hergestellten analytischen Hilfsmitteln ein selbständiges Aufnehmen eines - bei entsprechend genauer und reproduzierbarer Fertigung der kapillaraktiven Zone - definierten Probenvolumens. Die kapillaraktive Zone kann dabei beliebig geformt sein, solange zumindest in einer Dimension Kapillarität gewährleistet ist. Beispielsweise kann die kapillaraktive Zone einen dreieckigen, rechteckigen oder halbrunden Grundriss aufweisen, wobei die Ecken der Grundrissflächen vorzugsweise abgerundet sind, da somit der Gefahr von Kleberresten in der kapillaraktiven Zone vorgebeugt wird. Erfindungsgemäß bevorzugt sind kapillaraktive Zonen mit im wesentlichen quaderförmiger Geometrie, d. h. mit im wesentlichen rechteckigem Grundriss. Besonders bevozugt sind die

Als Trägerschicht kommen für die erfindungsgemäße Herstellung eines analytischen Hilfsmittels eine Reihe von Materialien in Frage, die üblicherweise zur Fertigung von analytischen Hilfsmitteln, beispielsweise Testelementen, eingesetzt werden, wie z. B. Metall- oder Kunstoffolien, beschichtete Papiere oder Pappen, sowie - wenn auch weniger bevorzugt - Glas. Bei der Verwendung des analytischen Hilfsmittels zur Untersuchung unpolarer Flüssigkeiten wird eine ausreichende Kapillarität der kapillaren Zone des erfindungsgemäß hergestellten analytischen Hilfsmittels bereits durch die Verwendung unpolarer Trägerschichten, z. B Kunststoffolien, erzielt. Zur Erzielung einer ausreichenden Kapillarität bei Anwendungen des analytischen Hilfsmittels bei der Untersuchung wäßriger Proben, wie z. B. Wasserproben oder biologischer Flüssigkeiten wie Blut, Serum, Urin, Speichel oder Schweiß, ist es vorteilhaft, wenn das verwendete Trägermaterial zumindest an der der kapillaraktiven Zone zugewandten Seite eine hydrophile Oberfläche besitzt.

Hydrophile Oberflächen sind in diesem Zusammenhang wasseranziehende Flächen. Wäßrige Proben, darunter auch Blut, spreiten auf solchen Oberflächen gut. Solche Flächen sind unter anderem dadurch charakterisiert, daß an der Grenzfläche ein Wassertropfen auf ihnen einen spitzen Rand- oder Kontaktwinkel ausbildet (vgl. dazu bspw. die Ausführungen unter dem Stichwort "Benetzung" in CD Römpp Chemie Lexikon Version 1.0, 1995). Im Gegensatz dazu wird auf hydrophoben, das heißt wasserabweisenden Oberflächen, an der Grenzfläche zwischen Wassertropfen und Oberfläche ein stumpfer Randwinkel ausgebildet.

Der Randwinkel als Resultat der Oberflächenspannungen der Prufflüssigkeit und der zu untersuchenden Oberfläche ist als Maß für die Hydrophilie einer Oberfläche geeignet. Wasser hat beispielsweise eine Oberflächenspannung von 72 mN/m. Liegt der Wert der Oberflächenspannung der betrachteten Fläche weit, d. h. mehr als 20 mN/m, unter diesem Wert, so ist die Benetzung schlecht und der resultierende Randwinkel ist stumpf Eine solche Fläche wird als hydrophob bezeichnet. Nähert sich die Oberflächenspannung dem Wert, der für Wasser gefunden wird, so ist die Benetzung gut und der Randwinkel wird spitz. Wird die Oberflächenspannung dagegen gleich oder größer dem für Wasser gefundenen Wert, so zerläuft der Tropfen und es findet Totalspreitung der Flüssigkeit statt. Ein Randwinkel ist dann nicht mehr zu messen. Flächen, die mit Wassertropfen einen spitzen Randwinkel bilden oder bei denen Totalspreitung eines Wassertropfens beobachtet wird, werden als hydrophil bezeichnet.

Die Bereitschaft einer Kapillare, eine Flüssigkeit aufzusaugen, geht mit der Benetzbarkeit der Kapillarenoberfläche mit der Flüssigkeit einher. Für wäßrige Proben bedeutet dies, daß eine Kapillare aus einem Material gefertigt werden sollte, dessen Oberflächenspannung nahe an 72 mN/m heranreicht oder diesen Wert übertrifft.

Ausreichend hydrophile Materialien zum Aufbau einer Kapillare, die schnell wäßrige Proben aufsaugt, sind beispielsweise Glas, Metall oder Keramik. Für den Einsatz in analytischen Hilfsmitteln, wie z. B. Testträgern, sind diese Materialien jedoch vielfach ungeeignet, da sie einige Nachteile aufweisen, beispielsweise Bruchgefahr bei Glas oder Keramik, oder Veränderung der Oberflächeneigenschaften mit der Zeit bei zahlreichen Metallen. Üblicherweise werden deshalb zur Fertigung von analytischen Hilfsmitteln, insbesondere von Testelementen, Kunstoffolien oder -formteile eingesetzt. Die verwendeten Kunststoffe übertreffen dabei in der Regel kaum eine Oberflächenspannung von 45 mN/m. Selbst mit den, relativ betrachtet, hydrophilsten Kunststoffen wie beipielsweise Polymethylmethacrylat (PMMA) oder Polyamid (PA) lassen sich - wenn überhaupt - nur sehr langsam saugende Kapillaren aufbauen. Kapillaren aus hydrophoben Kunststoffen wie beispielsweise Polystyrol (PS), Polypropylen (PP) oder Polyethylen (PE) saugen im wesentlichen keine wäßrigen Proben. Hieraus ergibt sich die Notwendigkeit, Kunststoffe für die Verwendung als Konstruktionsmaterial für analytische Hilfsmittel mit einer kapillaraktiven Zone, wie z. B. Testelemente mit Kapillarspalt, hydrophil auszustatten, das heißt zu hydrophilieren.

In einer bevorzugten Ausführungsform der erfindungsgemäß hergestellten analytischen Hilfsmittel ist zumindest eine, besser jedoch zwei, ganz besonders bevorzugt zwei sich gegenüberliegende Flächen der die innere Oberfläche des zum kapillaren Flüssigkeitstransports befähigten Kanals bildenden Flächen, hydrophiliert. Wird mehr als eine Fläche hydrophiliert, so können die Flächen entweder mit der gleichen oder mit unterschiedlichen Methoden hydrophil gemacht werden. Die Hydrophilierung ist vor allem dann notwendig, wenn die Materialien, die den kapillaraktiven Kanal bilden, insbesondere die Trägerschicht, selbst hydrophob oder nur sehr wenig hydrophil sind, beispielsweise weil sie aus unpolaren Kunststoffen bestehen. Unpolare Kunststoffe, wie zum Beispiel Polystyrol (PS), Polyethylen (PE), Polyethylenterephthalat (PET) oder Polyvinylchlorid (PVC), sind von Vorteil als Trägermaterialien, weil sie die zu untersuchenden wäßrigen Flüssigkeiten nicht absorbieren und nicht von diesen angegriffen werden. Durch die Hydrophilierung der Oberfläche der kapillaren Zone wird erreicht, daß eine polare, bevorzugt wäßrige Probenflüssigkeit bereitwillig und schnell in die kapillaraktive Zone eintritt. Falls das analytische Hilfsmittel ein Testelement ist wird die wäßrige Probe zusätzlich rasch zum Nachweiselement bzw. zu der Stelle des Nachweiselements, an der die Detektion stattfindet, transportiert.

Idealerweise wird die Hydrophilierung der Oberfläche der kapillaraktiven Zone dadurch erreicht, daß zu ihrer Fertigung ein hydrophiles Material eingesetzt wird, das jedoch die Probenflüssigkeit selbst nicht oder nicht wesentlich aufzusaugen vermag. Wo dies nicht möglich ist, kann die Hydrophilierung einer hydrophoben oder nur sehr wenig hydrophilen Oberfläche durch geeignete Beschichtung mit einer stabilen, gegenüber dem Probenmaterial inerten, hydrophilen Schicht erreicht werden, beispielsweise durch kovalente Bindung von photoreaktiv ausgerüsteten, hydrophilen Polymeren auf eine Kunststoffoberfläche, durch Aufbringen netzmittelhaltiger Schichten oder durch Beschichtung von Oberflächen mit Nanokompositen mittels Sol-Gel-Technologie. Darüberhinaus ist es möglich, durch thermische, physikalische oder chemische Behandlung der Oberfläche eine gesteigerte Hydrophilie zu erzielen.

Ganz besonders bevorzugt wird die Hydrophilierung durch die Verwendung von dünnen Schichten oxidierten Aluminiums erreicht, wie sie in der deutschen Patentanmeldung DE-A-19753848 beschrieben sind. Diese Schichten werden entweder direkt auf die gewünschten Bauteile des Testelements aufgebracht, beispielsweise durch Vakuumbedampfen der Werkstücke mit metallischem Aluminium und anschließende Oxidation des Metalls, oder in Form von Metallfolien oder metallbeschichteten Kunststoffolien für den Testträgeraufbau verwendet, die ebenfalls zur Erzielung der erwünschten Hydrophilie oxidiert werden müssen. Metallschichtdicken von 1 bis 500 nm sind dabei ausreichend. Die Metallschicht wird anschließend zu Bildung der oxidierten Form oxidiert, wobei sich neben der elektrochemischen, anodischen Oxidation vor allem die Oxidation in Gegenwart von Wasserdampf oder durch Kochen in Wasser als besonders geeignete Methoden herausgestellt haben. Die so erzielten Oxidschichten sind je nach Methode zwischen 0,1 und 500 nm, bevorzugt zwischen 10 und 100 nm dick. Größere Schichtdicken sowohl der Metallschicht als auch der Oxidschicht sind zwar prinzipiell praktisch realisierbar, zeigen aber keine weiteren vorteilhaften Wirkungen.

Bei dem erfindungsgemäß hergestellten analytischen Hilfsmittel wird die kapillare Zone aus der Trägerschicht, einer Distanzhalterschicht und einer Abdeckschicht geformt. Vorzugsweise dient die Distanzhalterschicht dazu, diejenige Dimension zu definieren, welche die Kapillarität der Zone bewirkt. Bevorzugt wird die Dicke der Distanzhalterschicht zur Definition dieser Dimension benutzt. Möglich ist es jedoch auch, ein entsprechend breites Stück aus der Distanzhalterschicht herauszuschneiden oder -stanzen, so daß sich eine Zone von kapillaraktiver Dimension ergibt. Die physikalischen Grenzen der Kapillaraktivität geben dabei zumindest eine Dimension der Zone vor. Für wäßrige Flüssigkeiten liegt diese Dimension in der Größenordnung von 10 bis 500 µm, bevorzugt zwischen 20 und 300 µm, ganz bevorzugt zwischen 50 und 200 µm da sonst keine Kapillaraktivität zu beobachten ist.

Obwohl die Distanzhalterschicht prinzipiell aus allen Materialien gefertigt werden kann, die inert gegen die zu analysierende Probenflüssigkeit sind, hat sich beidseitig klebendes Klebeband als bevorzugt herausgestellt, da sich bei Verwendung eines solchen das Problem der Befestigung der Distanzhalterschicht auf der Trägerschicht einerseits und der Abdeckschicht andererseits auf einfache Weise löst. Zeit- und kostenintensive Verbindungs- oder Klebevorgänge bei der Herstellung des analytischen Hilfsmittels entfallen. Unter Verzicht auf diesen Vorteil kann jedoch erfindungsgemäß die Herstellung des analytischen Hilfsmittels auch mit zusätzlichen Verbindungsvorgängen, z. B. durch Verschweißen, Heißsiegeln, beispielsweise mit Polyethylen, Verklebung mit härtendem Kaltkleber oder Schmelzkleber, oder Clipsen, der Trägerschicht mit einer Distanzhalterschicht sowie der Distanzhalterschicht mit der Abdeckschicht, erfolgen. Die Distanzhalterschicht kann hierbei prinzipiell aus den Materialien gefertigt werden, die auch für die Trägerschicht geeignet sind.

Da die Distanzhalterschicht neben der Trägerschicht und der Abdeckschicht die Geometrie der kapillaraktiven Zone bestimmt, wird bei dem erfindungsgemäßen Verfahren nach dem Aufbringen der Distanzhalterschicht auf die Trägerschicht eine Kontur in die Distanzhalterschicht eingebracht, die es erlaubt, diejenigen Teile der Distanzhalterschicht, die nicht für die Gestaltung der Geometrie der kapillaraktiven Zone benötigt werden, wieder von der Trägerschicht abzunehmen. Beispielsweise sei der Teil der Distanzhalterschicht genannt, der nach dem Abnehmen von der Trägerschicht den kapillaren Bereich des analytischen Hilfsmittels ausmacht.

Das Einbringen der Kontur durch die Distanzhalterschicht kann prinzipiell mit allen Verfahren erfolgen, die ein sauberes Trennen der auf der Trägerschicht verbleibenden von den von der Trägerschicht zu entfernenden Teilen der Distanzhalterschicht ermöglichen. Beispielsweise seien genannt Stanzen, Schneiden oder Prägen, wobei Stanzen oder Schneiden erfindungsgemäß bevorzugt sind. Als besonders vorteilhaft für die saubere Abtrennung der auf der Trägerschicht verbleibenden von den von der Trägerschicht zu entfernenden Teilen der Distanzhalterschicht hat sich herausgestellt, daß die Kontur durch die Distanzhalterschicht hindurch und somit geringfügig in die Trägerschicht hinein geschnitten wird, wobei darauf zu achten ist, daß in die Trägerschicht nicht so tief eingeschnitten wird, daß sie instabil wird. Dies kann durch entsprechend präzise Schneidewerkzeuge zuverlässig vermieden werden.

Für die bevorzugte Ausführungsform des analytischen Hilfsmittels, bei dem die Distanzhalterschicht aus einem beidseitig klebenden Klebeband geformt ist, hat es sich als vorteilhaft erwiesen, daß unmittelbar vor dem Stanzen, Schneiden oder Prägen der Kontur der kapillaraktiven Zone die Distanzhalterschicht auf die Trägerschicht auflaminiert wird und die Teile der Distanzhalterschicht, die nicht für die Formung der kapillaraktiven Zone benötigt werden, unmittelbar nach dem Stanzen, Schneiden oder Prägen der Kontur der kapillaraktiven Zone abgenommen werden. Auf diese Weise lassen sich Probleme beim Abnehmen der besagten Teile, wie z. B. das Verbleiben von Kleberresten in der kapillaraktiven Zone oder das Verkleben der durch Stanzen, Schneiden oder Prägen getrennten Bereiche der Distanzhalterschicht, vermeiden. Überraschenderweise wurde zudem gefunden, daß die Kanten der derart erzeugten Aussparung in der Distanzhalterschicht im Vergleich zur Verwendung von vorgestanzten Klebebändern besonders glatt und damit günstig für die Kapillarität sind.

Bei der bevorzugten Verwendung von beidseitig klebendem Klebeband als Distanzhalterschicht ist es erforderlich, daß nach dem Entfernen der nicht benötigten Bestandteile des Klebebandes und vor dem Aufbringen der Abdeckschicht die im Allgemeinen vorhandene Abdeckfolie (Interliner) des Klebebandes entfernt wird, so daß ein Aufkleben der Abdeckschicht überhaupt möglich wird.

Als Abdeckschicht für die kapillaraktive Zone des erfindungsgemäß hergestellten analytischen Hilfsmittels eignen sich sämtliche Materialien, die auch für die Trägerschicht in Frage kommen. Das analytische Hilfsmittel kann demnach im wesentlichen aus identischen Materialien für Trägerschicht, Distanzhalterschicht und Abdeckschicht bestehen, jedoch sind auch beliebige Materialkombinationen möglich. Für den bevorzugten Fall, daß das analytische Hilfsmittel für eine optische Untersuchung des Probenmaterials verwendet wird, ist es vorteilhaft, wenn zumindest die Trägerschicht oder die Abdeckschicht oder beide ganz oder teilweise aus einem transparenten Material, vorzugsweise einem transparenten Kunststoff, gefertigt sind.

Für den bevorzugten Fall, daß das erfindungsgemäße Verfahren zur Herstellung eines analytischen Testelements dient, wird als Trägerschicht eine einteilige Schicht verwendet, während die Abdeckschicht aus einem oder mehreren Teilen bestehen kann. Die Abdeckschicht kann ganz oder teilweise aus einem analytischen Nachweisfilm, wie er z. B. in der deutschen Patentanmeldung DE-A-196 29 656 beschrieben ist, bestehen.

Dieser Nachweisfilm besteht aus zwei Filmschichten auf einer transparenten Folie, wobei der Film insgesamt sämtliche Reagenzien und Hilfsstoffe enthält, die für eine analytische Nachweisreaktion mit der Probenflüssigkeit erforderlich sind. Solche Reagenzien und Hilfsstoffe sind dem Fachmann in einer Vielzahl von Varianten für eine Vielzahl von Analyten bekannt, beispielsweise aus der deutschen Patentanmeldung DE-A-196 29 656. Vorzugsweise führen die im Nachweisfilm enthaltenen Reagenzien und Hilfsstoffe bei Anwesenheit des gesuchten Analyten in der zu untersuchenden Flüssigkeitsprobe zu einem qualitativen oder quantitativen, visuell oder apparativ optisch detektierbaren Signal.

Wesentlich für den hier bevorzugten Nachweisfilm für die bevorzugte Ausführungsform eines analytischen Testelements ist, daß die auf der transparenten Folie liegende erste Schicht bedeutend weniger lichtstreuend ist als die darüberliegende zweite Schicht. Während die erste Schicht ein Quellmittel, wie zum Beispiel Methylvinylether-Maleinsäure Copolymer, und gegebenenfalls einen schwach lichtstreuenden Füllstoff enthält, benötigt die zweite Schicht ein Quellmittel und in jedem Fall wenigstens ein stark lichtsstreuendes Pigment und kann daneben auch nicht-poröse Füllstoffe sowie poröse Füllstoffe, wie Kieselgur in geringen Mengen enthalten, ohne dadurch für partikuläre Probenbestandteile, wie z. B. Erythrozyten, durchlässig zu werden.

Da die schwach lichtstreuenden Füllstoffe und die stark lichtstreuenden Pigmente wesentlich für die optischen Eigenschaften der Filmschichten verantwortlich sind, besitzen die erste und die zweite Filmschicht unterschiedliche Füllstoffe und Pigmente. Die erste Filmschicht soll entweder keine oder solche Füllstoffe enthalten, deren Brechungsindex nahe beim Brechungsindex von Wasser liegt, beispielsweise Siliziumdioxid, Silikate und Aluminiumsilikate. Die mittlere Korngröße besonders bevorzugter Füllstoffteilchen beträgt etwa 0,06 µm. Die zweite Schicht soll zweckmäßigerweise sehr stark lichtstreuend sein. Idealerweise liegt der Brechungsindex der Pigmente in der zweiten Filmschicht mindestens bei 2,5. Daher wird vorzugsweise Titandioxid eingesetzt. Teilchen mit einem mittleren Durchmesser von etwa 0,2 bis 0,8 µm haben sich als besonders vorteilhaft erwiesen.

Weiterhin hat es sich als bevorzugt herausgestellt, daß die Abdeckschicht bei Verwendung eines Nachweisfilms zusätzlich von einer weiteren Abdeckfolie gebildet wird, die bevorzugt neben dem Nachweisfilm und wie dieser aufder der Trägerschicht gegenüberliegenden Seite der kapillaren Zone liegt. Die Abdeckfolie ersetzt auf einem Teilstück der kapillaren Zone das Nachweiselement. Da letzteres in aller Regel wertvolle Reagenzien, wie beispielsweise Enzyme, enthält und aufgrund seines oftmals komplexen Aufbaus in der Herstellung um ein Vielfaches teurer ist als eine einfache Abdeckfolie, ergibt sich durch diese Maßnahme eine deutliche Verringerung der Material- und Produktionskosten. Dies wirkt sich vor allem bei langen kapillaren Zonen aus, worunter hier Zonen von mehr als 5 mm Länge zu verstehen sind. Zudem kann durch diese Maßnahme erreicht werden, daß bei Testelementen, bei denen in einem räumlich genau definierten Bereich die Nachweisreaktion im Nachweisfilm detektiert wird, zum Beispiel bei optischer Detektion in einem Gerät, und bei denen eine Trennung von Probenaufgabezone und Detektionszone, beispielsweise aus Gründen der Gerätehygiene, angestrebt ist, ein beschleunigter Probentransport von der Probenaufgabeöffnung im Testelement zur Detektionsstelle im Nachweiselement erfolgt, so daß der Transport der Probe im kapillaren Kanal von der Probenaufgabezone zum Detektionsbereich so schnell ist, daß die Analyse einer Probe zeitlich dadurch nicht limitiert wird. Außerdem wird durch eine solche Anordnung eine bequemere Anwendung für den Benutzer erreicht.

Die Montage von Abdeckfolie und Nachweisfilm hat so zu erfolgen, daß im fertigen Testelement beide Stoß an Stoß nebeneinander zu liegen kommen, so daß der Flüssigkeitstransport in der Kapillare an der Berührungsstelle von Abdeckfolie und Nachweisfilm nicht unterbrochen wird, beispielsweise durch ungünstige Veränderung des Kapillarenquerschnitts, worunter auch die Unterbrechung einer geschlossenen Begrenzungsfläche der Kapillare verstanden wird. Nachweisfilm und Abdeckfolie sind diesem Zweck entsprechend in ihren Dimensionen aneinander anzupassen. Ist eine ausreichend enge Montage der beiden Komponenten nicht möglich, kann durch nachträgliches Abdichten eine Unterbrechung der kapillaraktiven Zone vermieden werden.

Überraschenderweise wurde gefunden, daß für eine ganz besonders bevorzugte Ausführungsform des erfindungsgemäß hergestellten Testelements auf der dem zum kapillaren Flüssigkeitstransport befähigten Kanal hin zugewandten Seite der Abdeckfolie zusätzlich eine flexible, inerte Folie angebracht werden kann, die über die gesamte Länge der Abdeckung reicht, die kapillare Zone auf der gesamten Breite bedeckt und die zumindest teilweise zwischen den sich gegenüberliegenden Kantenflächen der Abdeckfolie und des Nachweisfilms eingeschlossen ist, so daß der kapillare Flüssigkeitstransport an der Berührungsstelle von Nachweisfilm und Abdeckfolie nicht abreißt. Die zusätzliche Folie kann vom Material und gegebenenfalls ihrer hydrophilierenden Beschichtung her weitgehend dem entsprechen, was weiter oben für Trägerschicht und Abdeckschicht beschrieben wurde. Nachweisfilm und Abdeckfolie sind auch bei dieser ganz besonders bevorzugten Variante möglichst eng montiert.

Vorzugsweise wird das erfindungsgemäße Verfahren zur Herstellung von analytischen Hilfsmitteln in großer Stückzahl genutzt, so daß das Verfahren weitgehend automatisiert werden kann. Zu diesem Zweck werden die Materialien für die analytischen Hilfsmittel, wie z. B. die Trägerschicht, die Distanzhalterschicht und die Abdeckschicht, in Form von Bandware - ähnlich einer Filmrolle - bereitgestellt. Das Einbringen der Kontur, welche die Form der kapillaraktiven Zone bestimmt, durch die Distanzhalterschicht, die auf die Trägerschicht auflaminiert ist, erfolgt vorzugsweise durch ein rotativ arbeitendes Schneidwerkzeug, welches bevorzugt eine Schneidewalze und einen Gegendruckzylinder enthält. Es ergibt sich vorteilhafterweise ein Endlosschnitt in der bzw. durch die Distanzhalterschicht, der eine präzise und reproduzierbare relative Lage auf dem Endlosband und folglich auf dem erfindungsgemäß gefertigten analytischen Hilfsmittel aufweist.

Bei diesem besonders bevorzugten erfindungsgemäßen Verfahren werden die analytischen Hilfsmittel, beispielsweise die analytischen Testelemente, nach dem Aufbringen der Abdeckschicht durch Schneiden oder Stanzen vereinzelt, d. h. von der bis dahin vorliegenden Bandform als vorzugsweiser schmaler, im wesentlichen rechteckiger Streifen abgetrennt. Die erfindungsgemäße Herstellung kann somit in einem Arbeitsgang bei hoher Produktionsgeschwindigkeit (0.1 m/min bis ca. 50 m/min) erfolgen.

Die Vorteile der Erfindung können wie folgt zusammengefaßt werden:
◆ Eine weitgehende Automatisierung des Herstellprozesses ist möglich, wodurch die Herstellkosten für die einzelnen analytischen Hilfsmittel gering bleiben.
◆ Die Lage und Größe der kapillaraktiven Zone auf dem analytischen Hilfsmittel wird genau und reproduzierbar eingehalten; die Lage relativ zu weiteren funktionalen Bestandteilen des analytischen Hilfsmittels, ist gut einstellbar und reproduzierbar.
◆ Die kapillaraktive Zone weist exakt und sauber abgegrenzte Ränder zur Distanzhalterschicht auf, wodurch die Kapillareigenschaften präzise einstellbar sind.

Die Erfindung wird durch die nachfolgenden Beispiele und Zeichnungen näher erläutert.
Figur 1 zeigt schematisch einen Teil der automatischen Fertigung eines analytischen Hilfsmittels gemäß einer bevorzugten Ausführungsform des erfindungsgemäßen Verfahrens.
Figur 2 zeigt schematisch sechs Stadien (A bis F) der Fertigung eines analytischen Hilfsmittels gemäß einer bevorzugten Ausführungsform des erfindungsgemäßen Verfahrens.
Figur 3 zeigt in einer schematischen Explosionszeichnung eine bevorzugte Ausführungsform eines analytischen Hilfsmittels, welches nach dem erfindungsgemäßen Verfahren herstellbar ist.

Die Ziffern in den Figuren bedeuten:
- 1: Trägerschicht
- 2: Distanzhalterschicht (Spacer)
- 3: Schneidewalze
- 4: Gegendruckzylinder
- 5: von der Trägerschicht abzuziehender Rest der Distanzhalterschicht
- 6: Abzugswelle
- 7: auf der Trägerschicht verbleibender Rest der Distanzhalterschicht
- 8: kapillaraktive Zone
- 9: Aussparung in der Trägerschicht
- 10: Nachweisfilm
- 11: Abdeckfolie
- 12: Schutzfolie

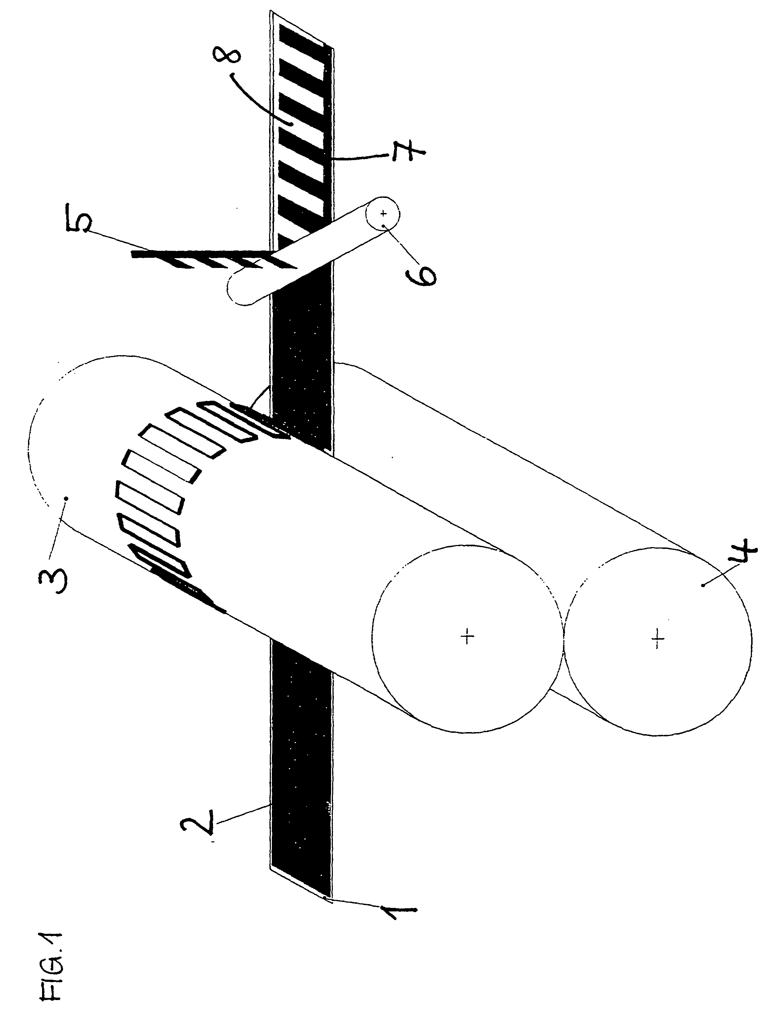

In Figur 1 ist schematisch ein Teil einer automatischen Produktionsanlage für analytische Hilfsmittel, insbesondere für analytische Testelemente abgebildet, die nach einer besonders bevorzugten Variante des erfindungsgemäßen Verfahrens arbeitet. In Figur 1 wird von links eine Trägerschicht 1, auf die bereits in einem unmittelbar vorgelagerten Produktionsschritt eine Distanzhalterschicht 2 in Form eines beidseitig klebenden Klebebandes auflaminiert wurde, als Bandware bereitgestellt und automatisch nach rechts transportiert. Dabei durchläuft das Laminat aus Trägerschicht 1 und Distanzhalterschicht 2 ein rotativ arbeitendes Schneidewerkzeug enthaltend eine Schneidewalze 3 und einen Gegendruckzylinder 4, wobei durch die Distanzhalterschicht 2 mit der Schneidewalze 3 eine Kontur in Form eines im wesentlichen rechtwinkligen Mäanders eingebracht wird, welche die Geometrie der kapillaraktiven Zone des fertigen analytischen Testelements bestimmt. Unmittelbar nach dem Durchlaufen des Schneidewerkzeugs enthaltend eine Schneidewalze 3 und einen Gegendruckzylinder 4 wird von der Trägerschicht 1 der davon abzuziehende Rest 5 der Distanzhalterschicht 2 abgezogen. Die dabei durchlaufene Abzugswelle 6 sorgt dafür, daß der abzuziehende Anteil 5 der Distanzhalterschicht 2 sauber und rückstandsfrei in Richtung der geschnittenen Kapillarengeometrie abgezogen werden kann, ohne daß der Rest 5 beim Abziehen abreißt. Schmalste Reste 5 der Distanzhalterschicht 2 können auf diese Weise reproduzierbar und zuverlässig entfernt werden. Der auf der Trägerschicht verbleibende Rest 7 der Distanzhalterschicht 2 bestimmt im wesentlichen die Geometrie der kapillaraktiven Zone 8, welche durch nachgelagertes, in dieser Figur nicht gezeigtes Abdecken der Distanzhalterschicht 2 mit einer Abdeckfolie entsteht, wobei unmittelbar vor dem Aufbringen der Abdeckfolie der Interliner des Klebebandes entfernt wird. Aus dem auf diese Weise erzeugten Endlosband aus Trägerschicht 1, Distanzhalterschicht 2 und Abdeckfolie werden am Ende des Fertigungsverfahrens durch Schneiden oder Stanzen einzelne Testelemente gewonnen, die jeweils eine kapillaraktive Zone 8 aufweisen.

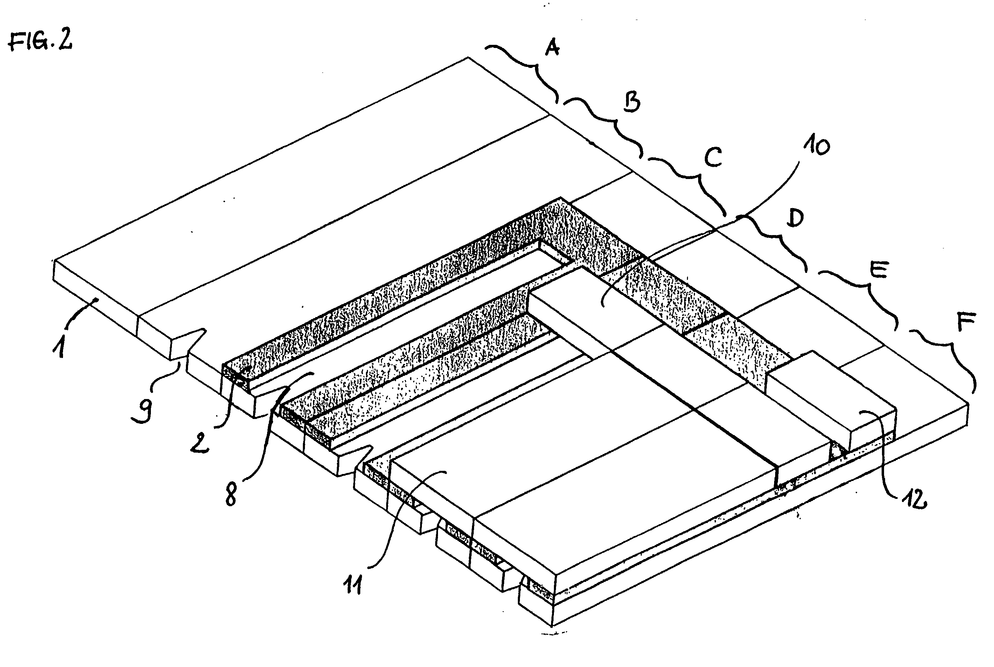

In Figur 2 sind schematisch sechs Fertigungsstadien (A bis F) eines nach einer bevorzugten Ausführungsform des erfindungsgemäßen Verfahrens herstellbaren analytischen Testelements abgebildet. In Stadium A wird eine Trägerschicht 1 bereitgestellt, in welche eine Kerbe 9 gestanzt wird, welche im fertigen analytischen Testelement u. a. als Orientierungshilfe für die Probenaufgabe und zur Erleichterung der Probenaufnahme in die Kapillare dienen kann (Stadium B). Stadium C zeigt die Trägerschicht 1, auf die nach dem Einbringen der Kerbe 9 eine Distanzhalterschicht 2 in Form eines beidseitig klebenden Klebebandes aufgebracht wurde. Durch die Distanzhalterschicht 2 wurde hier bereits die Kontur der kapillaren Zone 8 geschnitten, die nicht benötigten Reste der Distanzhalterschicht 2 abgezogen und die Abdeckfolie (Interliner) des Klebebandes abgezogen. Anschließend (Stadium D) wird ein analytischer Nachweisfilm 10 auf die dafür vorgesehene Stelle der auf der Trägerschicht 1 verbliebenen Distanzhalterschicht 2 laminiert. Der verbleibende, bisher nicht abgedeckte Bereich der kapillaraktiven Zone 8 wird mit einer Abdeckfolie 11 bedeckt, so daß sich eine zusammenhängende kapillaraktive Zone, die sowohl die Abdeckfolie 11 als auch den Nachweisfilm 10 umfaßt, ergibt (Stadium E). Fertigungsbedingt offen verbleibende Klebebandbereiche werden anschließend mit einer Schutzfolie 12 versehen, die ein unerwünschtes Verkleben der erfindungsgemäß gefertigten analytischen Testelemente verhindern soll (Stadium F). Zwischen Schutzfolie 12 und Nachweisfilm 10 verbleibt dabei ein kleiner, in der Regel wenige Millimeter großer Spalt, der ein Entweichen der Luft aus der kapillaraktiven Zone bei dessen Befüllung mit Probenflüssigkeit erlaubt. Aus dem selben Grund wird die Zone 8 von Abdeckfolie 11 und Nachweiselement 10 an der der Schutzfolie 12 zugewandten Seite nicht vollständig abgedeckt.

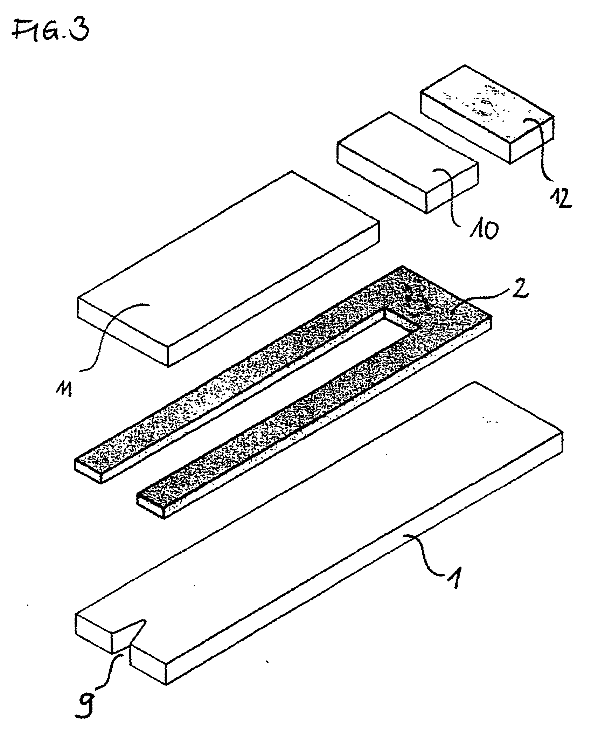

Das erfindungsgemäß hergestellte analytische Testelement aus Figur 2 ist in Figur 3 nochmals schematisch in einer Explosionszeichnung abgebildet. Auf der Trägerschicht 1, in die eine Kerbe 9 eingebracht wurde, befindet sich eine Distanzhalterschicht 2, welche die Kontur und die Höhe (entsprechend der Dicke der Distanzhalterschicht) des kapillaraktiven Kanals bestimmt. Auf dieser wiederum kommen eine Abdeckfolie 11, ein Nachweisfilm 10 sowie eine Schutzfolie 12 zu liegen. Abdeckfolie 11 und Nachweisfilm 10 werden so eng nebeneinander montiert, daß die kapillaraktive Zone von der freien, über der Kerbe 9 liegenden Kante der Abdeckfolie 11 bis zur gegenüberliegenden, freien Kante des Nachweisfilms 10 reicht. Die Aussparung in der Distanzhalterschicht 2 ist geringfügig länger gehalten als Abdeckfolie 11 und Nachweiselement 10 zusammen, so daß ein in aller Regel wenige Millimeter breiter, unbedeckter Spalt verbleibt, aus dem beim Befüllen der kapillaraktiven Zone mit Probenflüssigkeit Luft entweichen kann. Diese Spalt bleibt auch durch die Schutzfolie 12 unbedeckt, damit seine Funktion gewährleistet bleibt.

### Beispiel 1

### Herstellung eines analytischen Testelements nach dem erfindungsgemäßen Verfahren

Auf eine 350 µm dicke Trägerschicht aus Polyethylenterephthalat (Melinex®, ICI, Frankfurt am Main, Deutschland) wird ein doppelseitiges Klebeband der Dicke 100 µm als Distanzhalterschicht geklebt. Die Trägerschicht hat eine Länge von 25 mm und ist 5 mm breit. An einer der kurzen Seiten der Trägerschicht befindet sich eine zentrale, kerbenförmige Aussparung von 1 mm Breite und 2 mm Länge, wie sie beispielsweise auch in der Deutschen Patentanmeldung DE-A-197 53 850 beschrieben ist. Durch das auf die Trägerschicht laminierte Klebeband wird mit Hilfe eines entsprechend geformten Schneidewerkzeugs die Kontur für eine Aussparung von 2 mm Breite und 16 mm Länge, welche die Geometrie des Kapillarkanals definiert, eingebracht, ohne daß in die Trägerschicht so tief eingeschnitten wird, daß deren Festigkeit und Stabilität leidet. Die Länge der Aussparung ist geringfügig größer zu wählen als die gewünschte Länge des kapillaraktiven Kanals, die durch dessen Abdeckung bestimmt wird, um eine Entlüftung des Kanals während des Befüllens mit Probenflüssigkeit zu gewährleisten. Die nicht benötigten Teile des Klebebandes werden unmittelbar nach dem Einbringen der Kontur von der Trägerschicht abgezogen. Auf das verbleibende Klebeband wird auf der Seite, an der die Entlüftung vorgesehen ist, in 1 mm Abstand vom Ende der Ausstanzung ein 3 mm langer und 5 mm breiter Nachweisfilm geklebt. Als Nachweisfilm wird ein Film verwendet, wie er aus der deutschen Patentanmeldung Nr. P 196 29 656.0 bekannt ist. Der Nachweisfilm ist spezifisch für den Nachweis von Glucose. Auf den noch offen liegenden Bereich des Klebebandes zwischen kerbenförmiger Aussparung und Nachweisfilm wird eine 12 mm lange und 5 mm breite Abdeckfolie aufgeklebt, so daß Abdeckfolie und Nachweisfilm Stoß an Stoß zu liegen kommen. Die Abdeckfolie besteht aus einer 150 µm dicken, einseitig mit Klebstoffversehenen Polyethylenterephthalat-Folie, auf die auf der zum Kapillarkanal hingewandten Seite eine mit oxidiertem Aluminium der Dicke 30 nm beschichtete, 6 µm dicke Polyethylenterephthalat-Folie geklebt ist (beide: Hostaphan® Hoechst, Frankfurt am Main, Deutschland). Die dünnere Folie steht dabei an der zum Nachweisfilm gewandten Seite ca. 500 µm über die dickere Folie über. Bei der Montage der Abdeckfolie auf das Klebeband ist darauf zu achten, daß das überstehende Ende der dünneren Folie zwischen dem Nachweiselement und der dickeren Folie der Abdeckfolie zu liegen kommt. Um noch frei liegende Klebebandbereiche abzudecken werden diese mit einer 175 µm dicken Melinex®-Folie abgedeckt, ohne dabei jedoch funktionale Bereiche abzudecken.

Das so erhaltene Testelement hat eine kapillaren Kanal von 15 mm Länge, 2 mm Breite und 0,1 mm Höhe. Der Kanal kann 3 µl Probenflüssigkeit aufnehmen. Der Nachweisfilm wird auf einer Fläche von 3 mm × 2 mm von der Probe benetzt.

## Patentansprüche

1. Verfahren zur Herstellung von analytischen Hilfsmitteln mit einer kapillaraktiven Zone, bei dem
(a) eine Trägerschicht bereitgestellt wird;
(b) auf die Trägerschicht eine Distanzhalterschicht auflaminiert wird;
(c) durch die auf die Trägerschicht laminierte Distanzhalterschicht eine Kontur gestanzt, geschnitten oder geprägt wird, welche die Form der kapillaraktiven Zone bestimmt;
(d) diejenigen Teile der Distanzhalterschicht von der Trägerschicht abgenommen werden, die nicht für die Formung der kapillaraktiven Zone benötigt werden; und
(e) eine Abdeckschicht auf die Distanzhalterschicht aufgebracht wird, so daß sich eine kapillaraktive Zone ergibt.

2. Verfahren gemäß Anspruch 1, **dadurch gekennzeichnet, daß** die Distanzhalterschicht ein beidseitig klebendes Klebeband ist.

3. Verfahren gemäß Anspruch 1 oder 2, **dadurch gekennzeichnet, daß** die Abdeckschicht aus einem oder mehreren Teilen besteht.

4. Verfahren gemäß einem der Ansprüche 1 bis 3, **dadurch gekennzeichnet, daß** die Abdeckschicht zumindest teilweise aus einem analytischen Nachweisfilm besteht.

5. Verfahren gemäß einem der Ansprüche 1 bis 4, **dadurch gekennzeichnet, daß** das analytische Hilfsmittel ein analytisches Testelement ist.

6. Verfahren gemäß einem der Ansprüche 1 bis 5, **dadurch gekennzeichnet, daß** die Distanzhalterschicht unmittelbar vor dem Stanzen, Schneiden oder Prägen der Kontur der kapillaraktiven Zone auf die Trägerschicht auflaminiert wird.

7. Verfahren gemäß einem der Ansprüche 1 bis 6, **dadurch gekennzeichnet, daß** das Abnehmen derjenigen Teile der Distanzhalterschicht, die nicht für die Formung der kapillaraktiven Zone benötigt werden, unmittelbar nach dem Stanzen, Schneiden oder Prägen der Kontur der kapillaraktiven Zone erfolgt.

8. Verfahren gemäß einem der Ansprüche 1 bis 7, **dadurch gekennzeichnet, daß** die Trägerschicht, die Distanzhalterschicht und die Abdeckschicht in Form von Bandware bereitgestellt werden.

9. Verfahren gemäß Anspruch 8, **dadurch gekennzeichnet, daß** das Einbringen der Kontur durch ein rotativ arbeitendes Schneidwerkzeug als Endlosschnitt erfolgt.

10. Verfahren gemäß Anspruch 9, **dadurch gekennzeichnet, daß** das rotativ arbeitende Schneidwerkzeug eine Schneidewalze und einen Gegendruckzylinder enthält.

11. Verfahren gemäß einem der Ansprüche 8 bis 10, **dadurch gekennzeichnet, daß** nach dem Aufbringen der Abdeckschicht die analytischen Hilfsmittel durch Schneiden oder Stanzen vereinzelt werden.

## Claims

1. Process for the production of analytical devices with a capillary-active zone in which
(a) a carrier layer is prepared;
(b) a spacer layer is laminated onto the carrier layer;
(c) a contour which determines the shape of the capillary-active zone is punched, cut or stamped through the spacer layer laminated onto the carrier layer;
(d) those parts of the spacer layer are removed from the carrier layer which are not required for shaping the capillary-active zone; and
(e) a cover layer is mounted on the spacer layer so that a capillary-active zone is formed.

2. Process as claimed in claim 1, wherein the spacer layer is a double-sided adhesive tape.

3. Process as claimed in claim 1 or 2, wherein the cover layer is composed of one or several parts.

4. Process as claimed in one of the claims 1 to 3, wherein the cover layer is composed at least partially of an analytical detection film.

5. Process as claimed in one of the claims 1 to 4, wherein the analytical device is an analytical test element.

6. Process as claimed in one of the claims 1 to 5, wherein the spacer layer is laminated onto the carrier layer immediately before punching, cutting or stamping the contour of the capillary-active zone.

7. Process as claimed in one of the claims 1 to 6, wherein those parts of the spacer layer that are not required to form the capillary-active zone are removed immediately after punching, cutting or stamping the contour of the capillary-active zone.

8. Process as claimed in one of the claims 1 to 7, wherein the carrier layer, the spacer layer and the cover layer are provided in the form of tape material.

9. Process as claimed in claim 8, wherein the contour is introduced as a continuous cut by a rotary cutting tool.

10. Process as claimed in claim 9, wherein the rotary cutting tool contains a cutting roller and a counterpressure cylinder.

11. Process as claimed in one of the claims 8 to 10, wherein the analytical devices are separated by cutting or punching after applying the cover layer.

## Revendications

1. Procédé de préparation d'auxiliaires analytiques comprenant une zone d'activité capillaire, dans lequel
(a) il est fourni une couche de support ;
(b) sur la couche de support est laminée une couche d'espacement;
(c) la couche d'espacement laminée sur la couche de support est découpée par estampage, découpage ou poinçonnage suivant un contour qui correspond à la forme de la zone d'activité capillaire ;
(d) les parties de la couche d'espacement qui ne sont pas nécessaires à la formation de la zone d'activité capillaire sont éliminées de la couche de support ; et
(e) une couche de recouvrement est déposée sur la couche d'espacement de façon à produire une zone d'activité capillaire.

2. Procédé selon la revendication 1, **caractérisé en ce que** la couche d'espacement est une bande adhésive double face.

3. Procédé selon la revendication 1 ou 2, **caractérisé en ce que** la couche de recouvrement est constituée d'une ou de plusieurs parties.

4. Procédé selon l'une quelconque des revendications 1 à 3, **caractérisé en ce que** la couche de recouvrement est constituée au moins en partie d'un film de détection analytique.

5. Procédé selon l'une quelconque des revendications 1 à 4, **caractérisé en ce que** l'auxiliaire analytique est un élément de test analytique.

6. Procédé selon l'une quelconque des revendications 1 à 5, **caractérisé en ce que** la couche d'espacement est laminée sur la couche de support immédiatement avant estampage, découpage ou poinçonnage du contour de la zone d'activité capillaire.

7. Procédé selon l'une quelconque des revendications 1 à 6, **caractérisé en ce que** l'enlèvement des parties de la couche d'espacement qui ne sont pas nécessaires à la formation de la zone d'activité capillaire est effectué immédiatement après estampage, découpage ou poinçonnage du contour de la zone d'activité capillaire.

8. Procédé selon l'une quelconque des revendications 1 à 7, **caractérisé en ce que** la couche de support, la couche d'espacement et la couche de recouvrement sont fournies sous forme de bande.

9. Procédé selon la revendication 8, **caractérisé en ce que** le contour est formé en continu à l'aide d'un dispositif de découpage rotatif.

10. Procédé selon la revendication 9, **caractérisé en ce que** le dispositif de découpage rotatif comprend un cylindre de découpage et un cylindre de pression antagoniste.

11. Procédé selon l'une quelconque des revendications 8 à 10, **caractérisé en ce qu'**après la disposition de la couche de recouvrement, l'auxiliaire analytique est découpé par découpage ou poinçonnage.
